# EUROPÄISCHE PATENTSCHRIFT

(11) **EP 0 525 477 B1**
(45) Veröffentlichungstag und Bekanntmachung des Hinweises auf die Patenterteilung: **16.09.1998**
(21) Anmeldenummer: 92111770.1
(22) Anmeldetag: 10.07.1992
(51) Int. Cl.: C08F 2/46, C09K 19/38, G02F 1/35

(54) **Orientierte Photopolymere und Verfahren zu ihrer Herstellung**
Oriented photopolymers and process of preparing same
Photopolymères orientés et procédé pour leur préparation

(30) Priorität: 26.07.1991 CH 2244/91
(43) Veröffentlichungstag der Anmeldung: 03.02.1993
(73) Patentinhaber: Rolic AG, 6301 Zug (CH)
(72) Erfinder: Chigrinov, Vladimir Grigorievich, RU-123481 Moskau (RU); Kozenkov, Vladimir Marcovich, RU-141700 Dolgoprudniy, Moskau Region (RU); Novoseletsky, Nicolic Vasilievich, RU-141704 Dolgoprudniy, Moskau Region (RU); Reshetnyak, Victor Yurievich, RU-252000 Kiev, Ukraine (RU); Reznikov, Yuriy Alexandrovich, RU-252054 Kiev, Ukraine (RU); Schadt, Martin, CH-4411 Seltisberg (CH); Schmitt, Klaus, W-7850 Lörrach (DE)
(74) Vertreter: Eder, Carl E.

(56) Entgegenhaltungen:
- EP-A- 0 410 205
- EP-A- 0 445 629
- WO-A-91/03002
- US-A- 5 032 009

## Beschreibung

Die Erfindung betrifft Polymernetzwerke mit orientierter Molekülkonfiguration und Verfahren zu ihrer Herstellung.

Es ist bekannt, dass die Vernetzung von Polymeren durch photochemische Initiation bewirkt werden kann. Diese sog. Photovernetzung findet vielfältige Anwendung z.B. bei der Faserproduktion, Lackhärtung, Herstellung von Druckplatten, etc. Die durch Photovernetzung hergestellten Polymernetzwerke sollen für den Zweck dieser Beschreibung Photopolymere genannt werden.

Es ist auch bekannt, dass beim sog. Recken thermoplastischer Kunststoffe zum Zweck der Erhöhung ihrer Festigkeit eine parallele Ausrichtung der amorphen Bereiche stattfindet. Diese Ausrichtung kann z.B. thermisch fixiert werden. Auf diese Weise entstehen orientierte Polymere. Auch andere Verfahren der Herstellung orientierter Polymere sind bekannt, beispielsweise die einheitliche Ausrichtung im elektrischen Feld während der Polymerisation, sofern das Monomer einen elektrischen Dipol enthält.

Es wurde nun überraschend gefunden, dass orientierte Polymere auch dadurch herstellbar sind, dass die Orientierung und gleichzeitige Vernetzung durch Bestrahlung eines photovernetzbaren Materials mit linear polarisiertem Ultraviolett-Licht durchgeführt wird. Die dabei entstehenden orientierten Polymernetzwerke werden für den Zweck dieser Beschreibung als photoorientierte Polymernetzwerke bezeichnet.

Besonders bevorzugt ist es, verschiedene Bereiche des vernetzbaren Materials mit Licht von unterschiedlicher Polarisationsrichtung zu bestrahlen oder das vernetzbare Material in Teilbereichen mit linear polarisiertem UV-Licht, in anderen Teilbereichen mit unpolarisiertem Licht zu bestrahlen.

Dementsprechend enthält das erfindungsgemässe Photopolymer vorzugsweise verschieden orientierte Gebiete oder Gebiete mit unterschiedlich orientierten und unorientierten Molekülstrukturen.

Orientierte Photopolymere sind für unterschiedliche Anwendungen brauchbar. Eine spezielle Anwendung besteht in der Herstellung von Orientierungsschichten in Flüssigkristallzellen. Für die Einzelheiten dieser Anwendung wird auf die gleichzeitig hinterlegte Patentanmeldung Nr. EP-A-0 525 478 mit dem Titel "Flüssigkristallanzeigezelle" Bezug genommen.

Eine weitere Anwendung beruht aufder durch die Orientierung bewirkten optischen Anisotropie des Polymermaterials. Durch das erfindungsgemässe Verfahren hergestellte Polymerschichten können z.B. in Flüssigkristallzellen bzw. allgemein im optischen Strahlengang von Flüssigkristallzellen als sog. Kompensations- oder Retarderschichten eingesetzt werden, mit denen in hochverdrillten nematischen Zellen die typischen störenden Färbungen eliminiert werden können. Für Einzelheiten dieser und weiterer Anwendungen wird auf die gleichzeitig hinterlegte Patentanmeldung Nr. EP-A-0 525 473 mit dem Titel "Bilddarstellungseinrichtung" Bezug genommen.

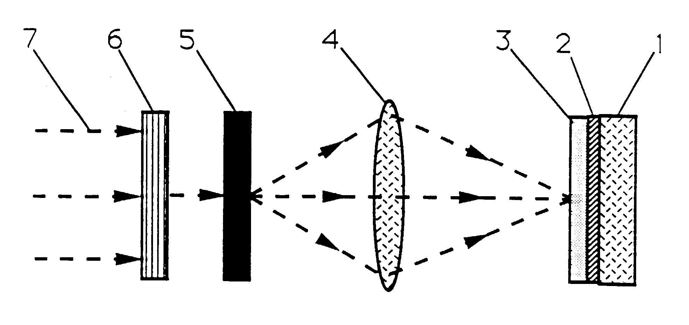

Im folgenden wird die Erfindung anhand der beiliegenden Zeichnung und der nachstehenden Beispiele näher erläutert.

Die Zeichnung zeigt in schematischer Darstellung eine einfache Vorrichtung zur Durchführung des erfindungsgemässen Verfahrens. Auf einem Substrat (z.B. Glasplatte) die mit einer Elektrodenschicht 2 versehen ist, befindet sich eine Schicht 3 aus einem photopolymerisierbaren organischen Material. Die Schicht wird mittels einer Linse 4 und gegebenenfalls einer vorgesetzten Maske 5 mit linear polarisiertem Licht bestrahlt. Dieses kommt von einem Polarisator 6, der mit unpolarisiertem UV-Licht 7 beleuchtet wird. An Stelle der Maske 4 kann auch ein interferometrisches Abbildungsverfahren mit linear polarisiertem Licht verwendet werden (UV Laser).

### Beispiel 1

Eine 2%ige Lösung von Polyvinylcinnamat (Mol. Gew. ∼ 15 000) in Methylcellosolveacetat wurde auf eine Glasplatte gegossen, 20 Minuten an der Luft und anschliessend auf einer Warmplatte mit 90°C getrocknet. Nach dieser Trocknung zeigte die Schicht keine messbare Doppelbrechung. Die Schicht wurde sodann bei Raumtemperatur mit Licht einer Quecksilberdampflampe durch einen Polarisationsfilter hindurch während 2 Stunden belichtet. Danach war im Mikroskop Doppelbrechung beobachtbar. Sie wurde im Kippkompensator vermessen und betrug Δn·d = 250nm.

### Beispiel 2

Eine Glasplatte wurde mit einer 2%igen Lösung von Polyvinylcinnamat (Mol. Gew. ∼ 15000) in Methylcellosolveacetat in einem Spin-Coating Verfahren mit 200 Upm beschichtet und entsprechend Beispiel 1 getrocknet. Nach der Trocknung zeigte die Schicht keine Doppelbrechung. Danach wurde wie in Beispiel 1 belichtet. Nach der Belichtung zeigte die Schicht einen optischen Gangunterschied Δn·d = 25 nm und einen Brechungsindex von ca. 1.6. Die Schichtdickenmessung mit einem Interferenzmikroskop ergab d = 455 nm.

### Beispiel 3

Eine Glasplatte wurde mit einer 2%igen Lösung von Polyvinylcinnamat (Mol. Gew. ∼ 15000) in Methylcellosolveacetat in einem Spin-Coating Verfahren mit 3000 Upm während ca. 30 s beschichtet. Die Dicke der so hergestellten Schicht betrug ca. 0.1µm. Danach wurde die Schicht ca. 20 min. an der Luft getrocknet und anschliessend während ca. 20 s auf ca. 80°-90°C erhitzt. Nach dieser Vorbehandlung wurde die Schicht während ca. 100 s der Bestrahlung mit dem Licht einer HgHP-Lampe mit einer Wellenlänge λ von ca. 365 nm durch einen Glen-Thomson-Polarisator ausgesetzt. Die Bestrahlungsenergie betrug ca. 15 mW/cm².

Die so behandelte Schicht hatte die Fähigkeit, die Moleküle einer angrenzenden Flüssigkristallschicht planar zu orientieren.

### Beispiel 4

In einem ähnlichen Vorgehen wie in Beispiel 1 wurde eine Schicht aus einer Lösung eines Polyvinylesters der Paramethoxyzimtsäure (Molekulargewicht ca. 15000-50000) in Chlorbenzol und Dichloräthylen 1:1 während ca. 10 s einer Bestrahlungsleistung des linear polarisierten Lichtes von ca. 0.5 J/cm² ausgesetzt. Die entstehende Schicht bewirkt ebenfalls eine parallele Orientierung eines angrenzenden Flüssigkristalls.

### Beispiel 5

Beispiel 1 wurde wiederholt, jedoch wurde die Belichtung mit linear polarisiertem UV-Licht in zwei aufeinanderfolgenden Schritten durch Masken so vorgenommen, dass im ersten Belichtungsprozess nur der durch die Maske nicht abgedeckte Teil der Schicht in die durch die Schwingungsrichtung des elektrischen Vektors des linear polarisierten Lichtes vorgegebene Richtung photopolymerisiert wurde. Im zweiten Belichtungsschritt wurde die Maske entfernt und mit UV-Licht bestrahlt, dessen Schwingungsrichtung gegenüber dem ersten Belichtungsschritt verändert wurde. Auf diese Weise wurde auf der Glasplatte ein Orientierungsmuster mit zwei unterschiedlichen Orientierungsrichtungen erzeugt.

### Beispiel 6

Beispiel 1 wurde wiederholt, wobei jedoch das linear polarisierte UV-Licht durch einen schmalen Schlitz so auf die dahinter langsam rotierende Glasplatte abgebildet wurde, das der elektrische Vektor des Lichtes parallel zur Längsachse des Schlitzes schwingt. Durch die Rotation der Platte während des Polymerisierungsprozesses entsteht eine radiale Orientierung des Polymers.

## Patentansprüche

1. Verfahren zur Herstellung eines photoorientierten Polymernetzwerks, dadurch gekennzeichnet, dass eine Orientierung und gleichzeitige Vernetzung durch Bestrahlung eines vernetzbaren Polymermaterials (3) mit linear polarisiertem UV-Licht (7) erfolgt.

2. Verfahren nach Anspruch 1, dadurch gekennzeichnet, dass verschiedene Bereiche des vernetzbaren Polymermaterials (3) mit Licht von unterschiedlicher Polarisationsrichtung bestrahlt werden.

3. Verfahren nach Anspruch 1, dadurch gekennzeichnet, dass das vernetzbare Polymerematerial (3) in Teilbereichen mit linear polarisiertem Licht, in anderen Teilbereichen mit unpolarisiertem Licht bestrahlt wird.

4. Photoorientiertes Polymernetzwerk, dadurch gekennzeichnet, dass es nach einem Verfahren gemäss einem der Ansprüche 1-3 hergestellt ist.

5. Photoorientiertes Polymernetzwerk nach Anspruch 4, dadurch gekennzeichnet, dass es gebietsweise verschieden orientierte Gebiete enthält.

6. Photoorientiertes Polymernetzwerk nach Anspruch 5, dadurch gekennzeichnet, dass es Gebiete mit unterschiedlich orientierten und unorientierten Molekülstrukturen enthält.

## Claims

1. A process for the manufacture of an oriented photopolymer, characterized in that an orientation and simultaneous polymerization is brought about by irradiating a polymerizable material (3) with plane-polarized UV-light (7).

2. A process according to claim 1, characterized in that different regions of the polymerizable material (3) are irradiated with light polarized in different directions.

3. A process according to claim 1, characterized in that some parts of the polymerizable material (3) are irradiated with plane-polarized light whereas other parts are irradiated with nonpolarized light.

4. A photopolymer, characterized in that it is manufactured by a process according to any of claims 1 to 3.

5. A photopolymer according to claim 4, characterized in that its orientation varies from region to region.

6. A photopolymer according to claim 5, characterized in that it contains regions with variously oriented or non-oriented molecular structures.

## Revendications

1. Procédé de préparation d'un réseau polymère photoorienté, caractérisé en ce qu'on obtient une orientation et une réticulation simultanée par insolation d'un matériau polymère (3) réticulable par de la lumière UV polarisée linéairement (7).

2. Procédé selon la revendication 1, caractérisé en ce qu'on insole différents domaines du matériau polymère (3) réticulable par de la lumière de sens de polarisation différents.

3. Procédé selon la revendication 1, caractérisé en ce qu'on insole le matériau polymère (3) réticulable dans des domaines partiels par de la lumière polarisée linéairement, et dans d'autres domaines partiels par de la lumière non polarisée.

4. Réseau polymère photoorienté, caractérisé en ce qu'on le prépare suivant un procédé selon l'une des revendications 1-3.

5. Réseau polymère photoorienté selon la revendication 4, caractérisé en ce qu'il contient par zones, des domaines d'orientations différentes.

6. Réseau polymère photoorienté selon la revendication 5, caractérisé en ce qu'il contient des domaines à structures moléculaires non orientées et orientées différemment.
